(19) Europäisches Patentamt
European Patent Office
Office européen des brevets

(11) **EP 4 478 496 A1**

(12) **EUROPEAN PATENT APPLICATION**

(43) Date of publication:
**18.12.2024 Bulletin 2024/51**

(21) Application number: **24181147.0**

(22) Date of filing: **10.06.2024**

(51) International Patent Classification (IPC):
*H01M 50/15* (2021.01)   *H01M 50/553* (2021.01)
*H01M 50/552* (2021.01)   *H01M 50/562* (2021.01)
*H01M 50/564* (2021.01)

(52) Cooperative Patent Classification (CPC):
**H01M 50/553; H01M 50/15; H01M 50/561;**
**H01M 50/562; H01M 50/564**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.06.2023   CN 202321467865 U**
**20.07.2023   CN 202321913353 U**
**14.11.2023   CN 202323075725 U**
**14.11.2023   CN 202311516756**
**19.04.2024   PCT/CN2024/088831**

(71) Applicants:
• **HUIZHOU EVE POWER CO., LTD**
**Huizhou, Guangdong 516039 (CN)**

• **Eve Power Co., Ltd.**
**Jingmen Hubei 448000 (CN)**

(72) Inventors:
• **ZHENG, Xu**
**Huizhou, 516039 (CN)**
• **SHU, Kuanjin**
**Huizhou, 516039 (CN)**
• **HE, Xiaowu**
**Huizhou, 516039 (CN)**
• **AN, Suli**
**Huizhou, 516039 (CN)**
• **WANG, Junmin**
**Huizhou, 516039 (CN)**
• **HE, Wei**
**Huizhou, 516039 (CN)**

(74) Representative: **Murgitroyd & Company**
**165-169 Scotland Street**
**Glasgow G5 8PL (GB)**

(54) **POLE POST, TOP CAP ASSEMBLY, AND CELL**

(57)    The disclosure provides a pole post (100), a top cap assembly, and a cell. The pole post (100) includes a metal base (110) and a metal post (120); the metal post (120) is disposed on a top of the metal base (110); a material of the metal post (120) is different from a material of the metal base (110); a bottom of the metal post (120) is connected to a top of the metal base (110), and a surface of the metal post (120) away from the metal base (110) is provided with a first groove (1201). The pole post (100) of the disclosure has higher reliability and lower cost.

FIG. 3

EP 4 478 496 A1

**Description**

TECHNICAL FIELD

The disclosure relates to the field of battery, and in particular, to a pole post, a top cap assembly, and a cell.

BACKGROUND

A pole post of a cell is an important component that connects an electrode assembly inside the cell to an external circuit. In order to exploit metals with different characteristics to improve the performance of the cell, a combination of two different metals is generally used to prepare the pole post of the negative electrode.

In the related art, in order to meet the requirements for the dimension, an upper metal block and a lower metal block are fixedly connected to each other to form metal composite blanks by the friction welding process, and the metal composite blanks are cut and processed by the computer numerical control (CNC), so as to form the pole post and ensure the dimension of the pole post, thereby forming the pole post with two different metals. However, during the process of cutting and forming the metal composite blanks, it will cause the waste of raw metal materials for producing the pole post, resulting in higher production cost of the pole post.

TECHNICAL PROBLEM

The disclosure provides a pole post, a top cap assembly, and a cell to solve the above-mentioned technical problem.

TECHNICAL SOLUTIONS

The disclosure provides a pole post, including:

a metal base; and

a metal post disposed on a top of the metal base, in which a material of the metal post is different from a material of the metal base, a bottom of the metal post is connected to a top of the metal base, and a surface of the metal post away from the metal base is provided with a first groove.

The disclosure further provides a top cap assembly including a cap plate and the pole post as discussed above, and the pole post is disposed on the cap plate.

The disclosure further provides a cell including a housing, an electrode assembly, and the top cap assembly as discussed above. The electrode assembly is disposed in an internal cavity of the housing, the cap plate is connected to the housing, and the electrode assembly is electrically connected to the pole post.

BENEFICIAL EFFECTS

The beneficial effects of the disclosure are as follows:

A pole post provided in the disclosure can be formed by a cold heading process. Compared to traditional pole posts formed by the friction welding process, the cold heading process improves the efficiency of producing the pole post, effectively reduces the waste of materials, and better controls the production cost. Moreover, on the basis of meeting the requirement for dimension, by forming a first groove in a metal post away from the metal base by cold heading, materials originally located at the first groove can move towards other positions of a metal post, thereby increasing the height of the metal post, saving the materials for the metal post, and reducing cost of producing the metal post.

The disclosure can reduce the production cost of the electrode assembly by setting the above-mentioned pole post in the cell.

BRIEF DESCRIPTION OF THE DRAWINGS

FIG. 1 is a schematic structural diagram of a pole post provided in an embodiment 1 of the disclosure.

FIG. 2 is an axial sectional view of the pole post in FIG. 1.

FIG. 3 is an axial sectional view of the pole post provided in an embodiment 2 of the disclosure.

FIG. 4 is an axial sectional view of the pole post provided in an embodiment 3 of the disclosure.

FIG. 5 is an axial sectional view of the pole post provided in an embodiment 4 of the disclosure.

FIG. 6 is an axial sectional view of the pole post provided in an embodiment 5 of the disclosure.

FIG. 7 is a schematic diagram of a top cap assembly provided in some embodiments of the disclosure.

FIG. 8 is an exploded view of the top cap assembly in FIG. 7.

FIG. 9 is a sectional view of the top cap assembly in FIG. 7.

FIG. 10 is a locally enlarged view at position G in FIG. 9.

Reference numerals:

100, pole post; 1001, joint surface;

110, metal base; 1101, second groove; 111, flange; 112, first step; 113, boss;

1141, first concave portion; 11411, socket slot; 11412, buckle slot; 1142, second protrusion portion; 1143, third protrusion portion; 11431, second socket section; 11432, second buckle section;

115, annular groove; 116, second step;

120, metal post; 1201, first groove; 1202, bottom surface of the first groove; 1203, sidewall of the first groove; 1204, outer sidewall of the metal post;

1211, first protrusion portion; 12111, first socket section; 12112, first buckle section; 1212, second concave portion; 1213, third concave portion; 122, stretch line;

200, cap plate;

300, briquetting; 310, mounting hole; and

400, connecting sheet; 410, stepped hole.

DETAILED DESCRIPTION

In the disclosure, the terms "connected" and "fixed" should be understood broadly, unless otherwise specified. For example, it can be a fixed connection, a detachable connection, or an integral connection; alternatively, it can be a mechanical connection or an electrical connection; and alternatively, it can be a direct connection, an indirect connection through an intermediate medium, an internal connection of two elements, or an interaction relationship between two elements. For ordinary skill in the art, specific meanings of the above terms in the disclosure may be understood based on specific application scenarios.

In the disclosure, the expression that a first feature is disposed "on", "above", "under", or "below" a second feature indicates that the first feature is in direct contact with the second feature, or in indirect contact with the second feature through other features between them, unless otherwise specified. Moreover, the expression that the first feature is disposed "on" or "above" the second feature indicates that the first feature is directly above and diagonally above the second feature, or simply indicates that the first feature is horizontally higher than the second feature. The expression that the first feature is disposed "under" or "below" the second feature indicates that the first feature is directly below and diagonally below the second feature, or simply indicates that the horizontal height of the first feature is less than that of the second feature.

In the disclosure, the terms "up", "down", "right", and other directional or positional relationships are based on the directional or positional relationships illustrated in the drawings, and are only for the convenience of description and simplification of operation, rather than indicating or implying that a device or a component must have a specific direction or should be constructed and operated in a specific direction. The terms cannot be understood as limitations to the disclosure. In addition, the terms "first", "second", or the like are only used to distinguish in the description of different features and have no special meanings.

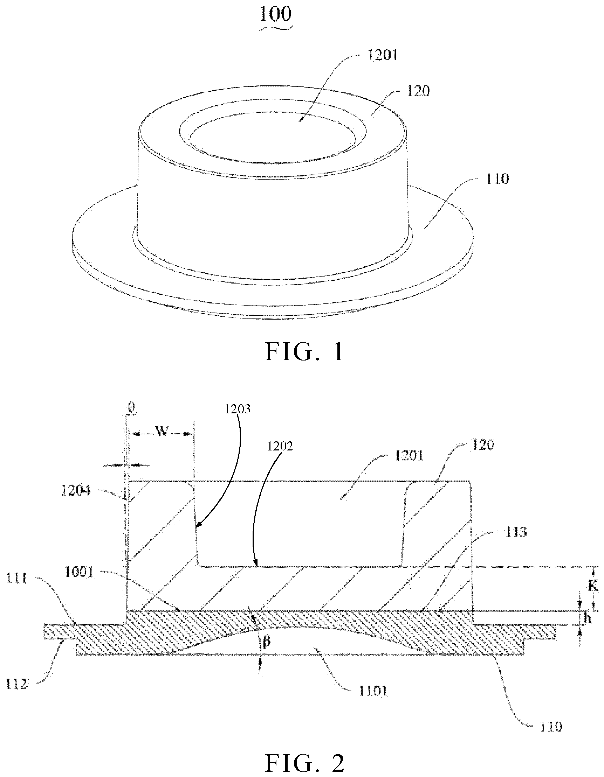

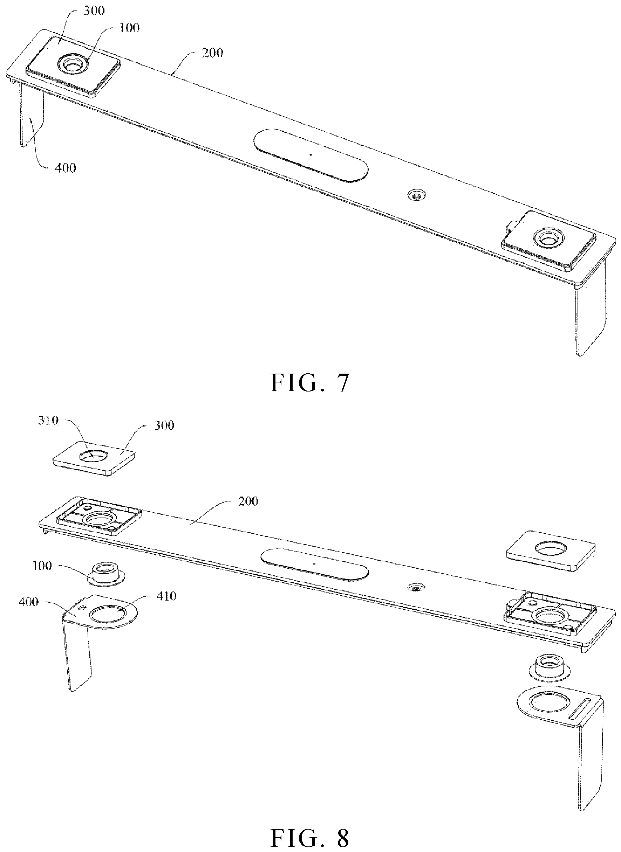

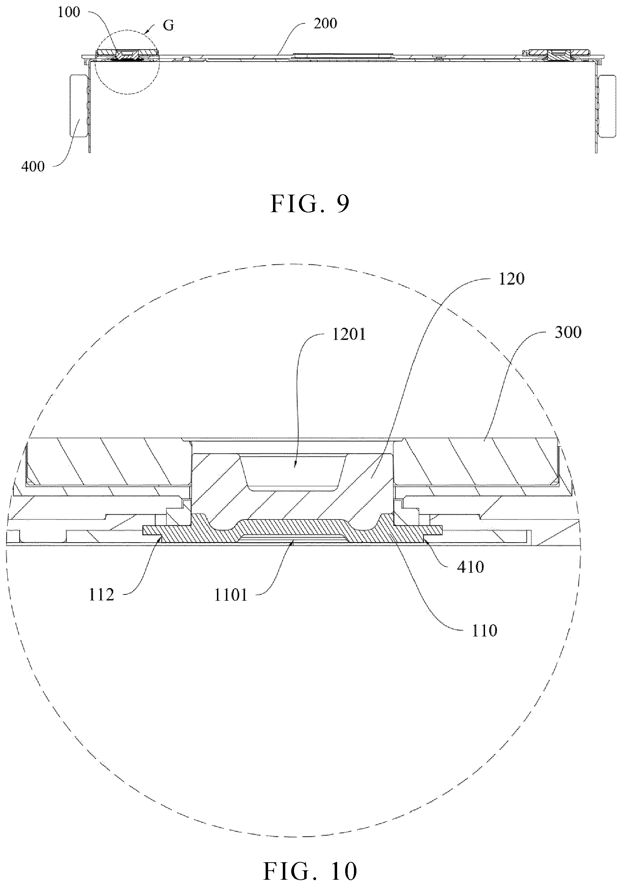

As illustrated in FIGs. 1 to 6, some embodiments of the disclosure provide a pole post 100 used in a top cap assembly as a negative electrode of a battery. In some embodiments, as illustrated in FIGs. 7 to 10, the top cap assembly includes a cap plate 200, a briquetting 300, a connecting sheet 400, and the pole post 100. A mounting hole 310 is provided in the briquetting 300. The pole post 100 passes through the cap plate 200 and is matched with the mounting hole 310. The pole post 100 and the briquetting 300 are fixed by laser welding. The briquetting 300 and the pole post 100 abut against two sides of the cap plate 200, respectively. An end of the pole post 100 is connected to an external circuit of the battery, and another end of the pole post 100 is connected to the connecting sheet 400 by welding. The connecting sheet 400 is connected to an electrode assembly in the battery, so as to achieve the function of charging and discharging. The structure of the cap plate 200 is clear to those of ordinary skill in the art and is not limited herein.

In some embodiments of the disclosure, the pole post 100 includes a metal base 110 and a metal post 120. The metal post 120 is disposed on a top of the metal base 110. Materials of the metal post 120 and the metal base 110 are different. A bottom of the metal post 120 is connected to a top of the metal base 110. A surface of the metal post 120 away from the metal base 110 is provided with a first groove 1201.

In some embodiments, the pole post 100 is formed by a copper-aluminum composite plate by a cold heading process. Compared to traditional pole posts formed by the friction welding process, the cold heading process improves the efficiency of producing the pole post 100, effectively reduces the waste of materials caused by the cutting process, and better controls the production cost. Moreover, the cold heading process enables the copper layer and the aluminum layer to be firmly bonded together, reducing the fracture risk of the pole post 100 and improving the reliability of the pole post 100.

In some embodiments, as illustrated in FIGs. 2 to 6, the pole post 100 includes the metal base 110 and the metal post 120 coaxially connected to each other, and peripheral dimensions of the metal base 110 and the metal post 120 decrease sequentially. The metal base 110 is made of copper. The metal post 120 is made of aluminum. An end surface of the metal base 110 is connected to an end surface of the metal post 120 to form a joint surface 1001, which is a contact surface between the metal post 120 and the metal base 110.

In some embodiments, the metal base 110 and the metal post 120 are both cylindrical structures, and an outer diameter of the metal base 110 is greater than an outer diameter of the metal post 120, so that the metal base 110 abuts against a lower surface of the cap plate 200 to achieve a limiting effect after the metal post 120 passes through the cap plate 200.

In some embodiments, as illustrated in FIGs. 2 to 6, the first groove 1201 is formed in the metal post 120 away from the metal base 110 by the cold heading process. The blanks undergo equal volume deformation by cold extrusion during the cold heading process, including forming the first groove 1201 on the top of the metal post 120 by the cold heading process, and enabling the material originally located at the first groove 1201 to move to other positions of the metal post 120. Because the diameter of the metal post 120 remains unchanged, the height of the metal post 120 increases during the cold heading process. While meeting the requirement for the dimensions, the process saves materials for producing the metal post 120, and reduces the cost of producing the metal post 120. Moreover, the setting of the first groove 1201 can reduce the weight of the top cap assembly of the battery to achieve a lightweight design.

In some embodiments, as illustrated in FIG. 2, a bottom surface 1202 of the first groove 1201 is higher than a bottom surface of the metal post 120, that is, the bottom surface 1202 of the first groove 1201 is higher than the joint surface 1001 between the metal post 120 and the metal base 110. In this setting, the first groove 1201 can be formed only in the metal post 120 (an aluminum layer) by cold heading without damaging the joint surface 1001 (a copper-aluminum joint surface) between the metal post 120 and the metal base 110, ensuring that the metal base 110 (the copper layer) and the metal post 120 (the aluminum layer) are firmly bonded together, reducing the fracture risk of the pole post 100, thereby improving the structural strength of the pole post 100.

Embodiment 1

As illustrated in FIG. 2, a distance K between the bottom surface 1202 of the first groove 1201 and the bottom surface of the metal post 120 (the joint surface 1001 between the metal post 120 and the metal base 110) in an axial direction is greater than 0.5 mm and less than 2.5 mm. For example, the distance K between the bottom surface 1202 of the first groove 1201 and the joint surface 1001 in the axial direction can be 0.6 mm, 0.8 mm, 1.0 mm, 1.2 mm, 1.4 mm, 1.6 mm, 1.8 mm, 2.0 mm, 2.2 mm, or 2.4 mm. By setting the distance K in the above range, the structural strength of the pole post 100 is improved, which prevents the pole post 100 from breaking at the joint surface 1001 between the metal post 120 and the metal base 110.

In some embodiments, as illustrated in FIG. 2, a minimum distance W between a sidewall 1203 of the first groove 1201 and an outer sidewall 1204 of the metal post 120 is greater than or equal to 1 mm. For example, the minimum distance W may be a minimum wall thickness of the metal post 120, and can be 1 mm, 2 mm, 3 mm, 4 mm, 5 mm, 6 mm, or 7 mm. By setting the minimum wall thickness of the metal post 120 in the above range, the structural strength of the pole post 100 is improved, which meets the requirement for welding strength, and improves the structural strength of the top cap assembly of the battery.

In some embodiments, as illustrated in FIG. 2, the outer sidewall 1204 of the metal post 120 is inclined relative to the axis of the metal post 120. An inclination direction and an inclination angle of an inner sidewall of the mounting hole 310 of the briquetting 300 are respectively the same as an inclination direction and an inclination angle of the outer sidewall 1204 of the metal post 120, and the outer sidewall 1204 of the metal post 120 is matched with the inner sidewall of the mounting hole 310. In some embodiments, as illustrated in FIG. 2, the outer sidewall 1204 of the metal post 120 is inclined towards the interior of the metal post 120 from bottom to top. In other embodiments, the outer sidewall 1204 of the metal post 120 can be inclined towards a direction close to the first groove 1201 from bottom to top, as long as the inner sidewall of the mounting hole 310 is set to have the same inclination direction and the same inclination angle as the outer sidewall 1204 of the metal post 120. That is, the outer sidewall 1204 of the metal post 120 and the inner sidewall of the mounting hole 310 are both inclined surfaces, so that the metal post 120 is matched with the mounting hole 310 through the inclined surface. On the one hand, the setting of the inclined surface prevents laser from irradiating and burning lower plastic component of the cap plate 200 during the laser welding process. On the other hand, the pole post 100 can be interlocked with the briquetting 300 through the inclined surface at the joint surface 1001, thereby improving the structural strength of the cap plate 200 of the battery.

In some embodiments, as illustrated in FIG. 2, an inclination angle θ between the outer sidewall 1204 of the metal post 120 and the axis of the metal post 120 is greater than 0° and less than or equal to 3°, for example, 1°, 2°, or 3°. By setting the inclination angle of the outer sidewall 1204 of the metal post 120 in the above range, preventing laser from irradiating and burning the lower plastic components during the laser welding process, enabling the pole post 100 to be interlocked with the briquetting 300 at the joint surface 1001, further improving the structural strength of the cap plate 200 of the battery.

As illustrated in FIG. 1 and FIG. 2, the peripheral dimensions of the metal base 110 and the metal post 120 decrease sequentially. A side of the metal base 110 close to the metal post 120 is provided with a boss 113. A peripheral dimension of the boss 113 is less than the peripheral dimension of the metal base 110 and substantially the same as a peripheral dimension of the bottom of the metal post 120. The boss 113 is connected to the metal post 120, and a connecting end surface between the boss 113 and the metal post 120 is the joint surface 1001 (the copper-aluminum joint surface). When forming the metal base 110 by the cold heading process, aluminum used to form the metal post 120 and part copper used to form the boss 113 can be precisely limited by a sidewall of a concave cavity of a concave mold, and other copper outside the concave mold will be pressed by a protrusion mold to form the metal base 110. Therefore, the setting of the boss 113 limits the flow of aluminum, avoiding the dimension of the metal post 120 being too small caused by insufficient volume of aluminum. Moreover, it also makes the metal base 110 only form as the copper layer without damaging the copper-aluminum joint surface, thereby improving the structural strength of the pole post 100 and reducing the fracture risk of the pole post 100.

As illustrated in FIG. 2, the boss 113 has a height h greater than 0.3 mm and less than 1.2 mm. That is, a distance h between a top surface of the boss 113 and a flange 111 in an axial direction is greater than 0.3 mm and less than 1.2 mm. In some embodiments, the height h of the boss 113 can be 0.4 mm, 0.5 mm, 0.6 mm, 0.7 mm, 0.8 mm, 0.9 mm, 1.0 mm, or 1.1 mm. By setting the height h of the boss 113 in the above range, it can effectively avoid limiting the flow of aluminum during the cold heading process caused by the height h being too small, and avoid the increase of the amount of copper required for the higher height h.

In some embodiments, as illustrated in FIG. 2, a surface of the metal base 110 away from the metal post 120 is provided with a second groove 1101. Apart of the bottom surface of the metal post 120 is located between the first groove 1201 and the second groove 1101. Apart of the metal base 110 extends outside a peripheral surface of the metal post 120 in a radial direction. By forming the second groove 1101 at the bottom of the metal base 110 by extrusion, the material originally located at the second groove 1101 of the metal base 110 extends radically outwards during the cold heading process. Because the volume is not changed after the metal base 110 deforms during the cold heading process, the diameter of the metal base 110 can be enlarged, and the dimension around the second groove 1101 can be enlarged accordingly to meet the requirement for the dimension.

In some embodiments, as illustrated in FIG. 2, a longitudinal sectional surface of the second groove 1101 is in an arc shape, and an angle β between a circumferential sidewall of the second groove 1101 and a horizontal plane is greater than or equal to 15° and less than or equal to 60°. For example, the angle β may be 15°, 20°, 25°, 30°, or 40°. By setting the angle β of the circumferential sidewall of the second groove 1101 in the above range, the metal base 110 has a larger diameter, providing better fluidity for copper used in the copper-aluminum composite plate, making the bottom of the pole post 100 less prone to fracture, thereby improving the structural strength of the pole post 100. In other embodiments, a shape of a circumferential sectional surface of the second groove 1101 may be, but not limited to, circular, square, elliptical, or other irregular shapes, and can be flexibly adapted according to the requirements without special limitations.

In some embodiments, the flange 111 is formed at a peripheral surface of the metal base 110. The flange 111 protrudes from an edge of the metal post 120 in a direction away from an axis of the metal base 110. That is, the flange 111 extends along the direction away from the axis of the metal base 110 and protrudes from the edge of the metal post 120.

In some embodiments, as illustrated in FIG. 2 and FIG. 8, a surface of the flange 111 away from the metal post 120 is provided with a first step 112, a stepped hole 410 is provided in the connecting sheet 400, and the first step 112 is configured to be matched with the stepped hole 410. In some embodiments, the setting of the first step 112 makes the metal base 110 have two different outer diameters, and the stepped hole 410 includes two holes with different diameters. When the metal base 110 is matched with the connecting sheet 400, a part of the metal base 110 having a smaller outer diameter passes through one hole of the stepped hole 410 having a smaller diameter, a part of the metal base 110 having a larger outer diameter is matched with another hole of the stepped hole 410 having a larger diameter, and a stepped surface of the first step 112 of the metal base 110 abuts against a stepped surface of the stepped hole 410. This setting improves the positioning effect between the metal base 110 and the connecting sheet 400. After the installation, the mutual movement between the metal base 110 and the connecting sheet 400 is limited to facilitate the subsequent assembly and welding process. Moreover, the fitting of the two stepped surfaces can block the gap between a part of the metal base 110 having a smaller outer diameter and an inner sidewall of the stepped hole 410, avoiding the heat generated by welding from being transmitted to the lower plastic component of the cap plate 200 through the gap.

In some embodiments, the joint surface 1001 between the metal base 110 and the metal post 120 is a flat surface. The second groove 1101 is disposed corresponding to the first groove 1201. The joint surface 1001 between the metal base 110 and the metal post 120 undergoes a downward force when forming the first groove 1201, and undergoes an upward force when forming the second groove 1101. That is, the joint surface 1001 between the metal base 110 and the metal post 120 undergoes two forces from opposite directions. The two forces cancel out, making the joint surface 1001 between the metal base 110 and the metal post 120 be the flat surface.

Embodiment 2

The embodiment 2 of the disclosure is similar to the embodiment 1, and the part not described in detail can refer to the embodiment 1.

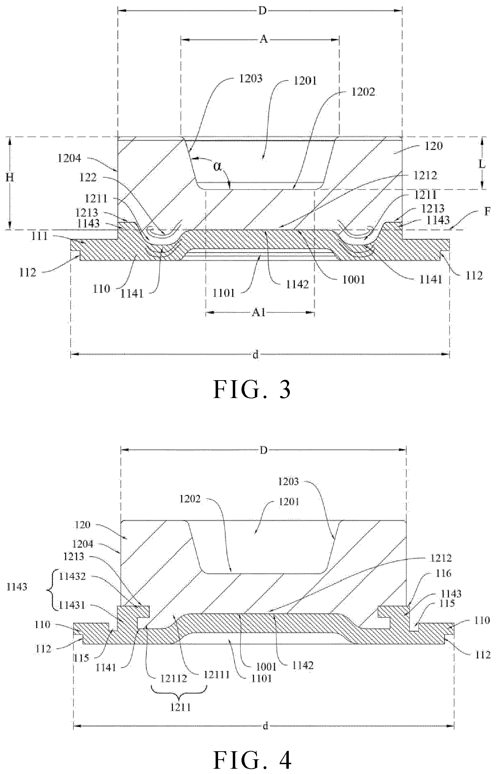

As illustrated in FIG. 3, in the embodiment 2, a distance H between a top surface of the metal post 120 and a plane F where the bottom surface of the metal post 120 below the bottom surface 1202 of the first groove 1201 is located. The distance H, a volume V of the first groove 1201, and an area S of an orthogonal projection of the metal post 120 on the metal base 110 satisfy the following relationship: $3 \text{ mm} \leq \text{H-V/S} \leq 10 \text{ mm}$.

The above relationship ensures that the dimension of the pole post 100 can meet the requirement for the cold heading process, avoiding the waste of raw materials for producing the pole post 100, and reducing the production cost of the pole post 100.

In some embodiments, the second groove 1101 is disposed at the bottom of the metal base 110. The metal post 120 is disposed on the top of the metal base 110. The bottom of the metal post 120 is connected to at least a part of the top of the metal base 110. The distance H between the top surface of the metal post 120 and the plane F where the bottom surface of the metal post 120 between the first groove 1201 and the second groove 1101 is located. The distance H, the volume V of the first groove 1201, and the area S of the orthogonal projection of the metal post 120 on the metal base 110 satisfy the following relationship: $3 \text{ mm} \leq \text{H-V/S} \leq 10 \text{ mm}$.

In some embodiments, when the pole post 100 satisfies the above relationship, it can be prepared by the cold heading process. During the cold heading process, $H_0$ represents a distance between an initial top surface of the metal post 120 and an initial bottom surface of the metal post 120 before the cold heading process, that is, an initial thickness of the metal post 120; and H represents the distance between the top surface of the metal post 120 and the plane F where the bottom surface of the metal post 120 between the first groove 1201 and the second groove 1101 is located after the cold heading process, that is, a molding thickness of the metal post 120. $H_0$, H, V, and S satisfy the following equation: $H_0 = \text{H-V/S}$. When the area S of the orthographic projection of the metal post 120 on the metal base 110 remains substantially unchanged, the metal post 120 originally positioned at the first groove 1201 extends to an unrestricted position due to the equal volume deformation of the metal post 120, which increases the height of the metal post 120. Therefore, the distance H between the top surface of the metal post 120 and the plane F where the bottom surface of the metal post 120 between the first groove 1201 and the second groove 1101 is located after cold heading is positively correlated with the volume V of the first groove 1201.

In the pole post 100 of some embodiments, the first groove 1201 on the metal post 120 is formed by extrusion, increasing the distance H between the top surface of the metal post 120 and the plane F where the bottom surface of the metal post 120 between the first groove 1201 and the second groove 1101 is located, that is, increasing the thickness (height) of the metal post 120, so that the height of the metal post 120 meets the requirement for the height of the pole post 100 in the cell.

The pole post 100 provided in some embodiments can be prepared by the cold heading process. Compared to the friction welding process in the related art, the cold heading process has less requirements for the process, has stronger operability, and needs lower processing temperature. Moreover, during the cold heading process, it is not easy to cause thermal stress of metal, avoiding the deformation caused by thermal stress on the metal base 110 and the metal post 120, avoiding cracks and even fractures on the welding surface of the metal base 110 and the metal post 120 caused by high temperature, thereby improving the reliability and safety of the pole post 100.

As illustrated in FIG. 3, in the embodiment 2 of the disclosure, the second groove 1101 is disposed in the metal base 110 away from the metal post 120, and disposed corresponding to the first groove 1201, so that the metal post 120 undergoes an extrusion force pointing from the metal base 110 to the metal post 120 during the cold heading process, which increases the bonding strength between the metal base 110 and the metal post 120 at the joint surface 1001, strengthens the bonding strength between the metal base 110 and the metal post 120, and improves the reliability of the pole post 100.

In some embodiments, the joint surface 1001 between the metal post 120 and the metal base 110 is recessed towards the metal base 110, which is formed when stamping the first groove 1201. In other embodiments, the joint surface 1001 may be uneven. By setting the joint surface 1001 being uneven, the contact surface between the metal post 120 and the metal base 110 is formed by fitting a concave surface with a convex surface, which improves the bonding strength between the metal post 120 and the metal base 110, ensures that the copper layer and the aluminum layer are firmly bonded, reduces the fracture risk of the pole post 100, and improves the structural strength of the pole post 100.

In some embodiments, a part of the bottom surface of the metal post 120 is located between the first groove 1201 and the second groove 1101, a surface of the metal post 120 close to the metal base 110 is provided with a first protrusion portion 1211 protruding towards the metal base 110. An orthographic projection of the first protrusion portion 1211 on a plane where the metal base 110 is located surrounds an orthographic projection of the bottom surface 1202 of the first groove 1201 on the plane where the metal base 110 is located. The first protrusion portion 1211 extends towards the metal base 110.

A surface of the metal base 110 close to the metal post 120 is provided with a first concave portion 1141 matched with the first protrusion portion 1211. A top surface of the first concave portion 1141 is in contact with a bottom surface of the first protrusion portion 1211. The joint surface 1001 between the first concave portion 1141 and the first protrusion portion 1211 is a curved surface. When the metal base 110 undergoes an external extrusion force at the second groove 1101, a part of the metal base 110 corresponding to the second groove 1101 moves towards the metal post 120, causing the metal post 120 located between the first groove 1201 and the second groove 1101 to extend towards the outer periphery of the second groove 1101, thereby forming the first protrusion portion 1211.

The top surface of the metal base 110 is in direct contact with the bottom surface of the metal post 120. The top surface of the metal base 110 is provided with the first concave portion 1141 matched with the first protrusion portion 1211 of the metal post 120. That is, the first concave portion 1141 of the metal base 110 is in contact with the first protrusion portion 1211 of the metal post 120, which increases a contact area between the metal base 110 and the metal post 120, strengthens the bonding strength between the metal base 110 and the metal post 120, improves the reliability of the pole post 100, and effectively improves the fracture problem of the pole post 100.

In some embodiments, a part of the joint surface 1001 between the metal base 110 and the metal post 120 is a curved surface, and an orthogonal projection of the curved surface on the plane where the metal base 110 is located surrounds an orthogonal projection of the second groove 1101 on the plane where the metal base 110 is located. The first groove 1201 and the second groove 1101 are configured to be matched with an external cold heading equipment, so that the cold heading equipment can apply an extrusion force on the metal base 110 and the metal post 120, achieving the equal volume deformation of the metal base 110 and the metal post 120. At least a part of the joint surface 1001 between the metal base 110 and the metal post 120 surrounding the second groove 1101 is a curved surface, that is, a part of the joint surface 1001 between the metal base 110 and the metal post 120 is a curved surface, which increases the contact area between the metal base 110 and the metal post 120, forms an interlocking structure consisting of the metal base 110 and the metal post 120, strengthens the bonding strength between the metal base 110 and the metal post 120, and avoids the fracture risk of the pole post 100.

In some embodiments, the metal base 110 and the metal post 120 have different hardness.

In some embodiments, the hardness of the metal base 110 is greater than the hardness of the metal post 120.

In some embodiments, the number of the first groove 1201 and the second groove 1101 are one, and the central axis of the first groove 1201 and the central axis of the second groove 1101 are in the same axis.

Both of the central axis of the first groove 1201 and the central axis of the second groove 1101 coincide with the central axis of the pole post 100.

Alternatively, the number of the second grooves 1101 is two or more than two.

As illustrated in FIG. 3, in some embodiments, a longitudinal sectional surface of a part of the metal post 120 and/or the metal base 110 overlapping with the curved surface has a stretch line 122 that is a curve. A protruding direction of the stretch line 122 and a protruding direction of the first protrusion portion 1211 are the same.

In some embodiments, for the longitudinal sectional surface of the pole post 100, both of a part of the metal post 120 overlapping with the curved surface and a part of the metal base 110 overlapping with the curved surface have the stretch line 122. The metal structural grains in the metal post 120 and the metal base 110 are arranged along the stretch line 122, and the atomic arrangement at the interfaces (grain boundary) among the metal structural grains is irregular, which improves the shaping resistance of the metal base 110 and the metal post 120, so that the metal base 110 and the metal post 120 have higher strength and hardness, and the pole post 100 has stronger impact resistance and compression resistance after being formed by the cold heading process.

In some embodiments, the method for observing the stretch line 122 is as follows: cutting the pole post 100 along the axis of the pole post 100, immersing it in acidic liquid for a period of time, and observing the sectional surface of the pole post 100. Because the grain boundary has higher free energy, the grain boundary is susceptible to the corrosion of acidic solutions to form channels, showing the stretch line 122 formed by the arrangement of polygonal grains.

In some embodiments, the pole post 100 is a copper-aluminum composite member. The metal base 110 is the copper layer of a copper-aluminum composite member, and the metal post 120 is an aluminum layer of the copper-aluminum composite member.

In some embodiments, the copper-aluminum composite member is a composite member that combines a copper plate and an aluminum plate by special processes such as rolling and sintering processes before the cold heading process. That is, before the pole post 100 is formed by the cold heading process, the aluminum layer is composite on the copper layer, and the copper-aluminum composite member is an integrated structure with the copper layer and the aluminum layer inseparable. For the cold heading process, the copper-aluminum composite member is placed in the cold heading equipment to perform the molding process of the pole post 100 by the cold heading process. The joint surface 1001 between the metal base 110 and the metal post 120 is the copper-aluminum joint surface after the cold heading process, and the copper-aluminum joint surface is the joint surface 1001 formed by the original joint surface of the copper-aluminum composite member after undergoing the deformation during the cold heading process.

Alternatively, the pole post 100 is a copper-aluminum embedding member. The metal base 110 is a copper layer of the copper-aluminum embedding member, and the metal post 120 is an aluminum layer of the copper-aluminum embedding member.

In some embodiments, the copper-aluminum embedding member is an embedding structure in which the copper layer and the aluminum layer are separable before the cold heading process. The copper layer and the aluminum layer can be embedded with each other during the cold heading process or before the cold heading process. For example, the copper layer and the aluminum layer are embedded with each other by the butting of a clamping slot and a clamping tape, or by the meshing of convex teeth, or by riveting. Before the pole post 100 is formed by the cold heading process, the copper layer and the aluminum layer are in contact with each other and do not form the composite, the joint surface 1001 between the metal base 110 and the metal post 120 of the molded pole post 100 is the copper-aluminum joint surface, which is formed after the cold heading of the copper-aluminum embedding member. After the pole post 100 is formed by the cold heading process, the copper layer is composite with the aluminum layer.

As illustrated in FIG. 3, in some embodiments, an angle $\alpha$ between the bottom surface 1202 of the first groove 1201 and the sidewall 1203 of the first groove 1201 is greater than 90° and less than 180°. A cross-sectional surface of the first groove 1201 is in an inverted trapezoidal shape, making a part of the metal post 120 below the first groove 1201 have a larger flow area, which strengthens the bonding strength between the metal post 120 and the metal base 110, improves the strength of the metal post 120 itself, and prevents impurities or dust from getting stuck in the first groove 1201.

In some embodiments, the angle $\alpha$ between the bottom surface 1202 of the first groove 1201 and the sidewall 1203 of the first groove 1201, a diameter A1 of the bottom surface 1202 of the first groove 1201, a diameter A of a top opening of the first groove 1201, and a depth L of the first groove 1201 satisfy the following equation: $A=A1+2 L \tan(\alpha-90°)$. When the diameter A1 of the bottom surface 1202 of the first groove 1201 and the depth L of the first groove 1201 are constant, the larger the angle $\alpha$ between the bottom surface 1202 of the first groove 1201 and the sidewall 1203 of the first groove 1201, the larger the diameter A of the top opening of the first groove 1201.

In some embodiments, the angle $\alpha$ between the bottom surface 1202 of the first groove 1201 and the sidewall 1203 of the first groove 1201 is greater than 90 ° and less than 150 °.

In some embodiments, the angle $\alpha$ between the bottom surface 1202 of the first groove 1201 and the sidewall 1203 of the first groove 1201 can be 92°, 93°, 94°, 95°, 98°, 100°, 103°, 105°, 106°, 107°, 108°, 109°, 110°, 112°, 113°, 115°, 116°, 117°, 120°, 125°, 130°, 134°, 135°, 140°, 142°, or 145°.

In the above range, because the difference between the diameter A1 of the bottom surface 1202 of the first groove 1201 and the diameter A of the top opening of the first groove 1201 is small, there is no need to set a too deep first groove 1201 during the machining process of the pole post 100, which can significantly increase the height of the metal post 120 during the deformation process, avoid the depth of the first groove 1201 being too deep and exceeding the bottom surface of the metal post 120, improves the yield of the pole post 100, and solve the problem of the width of the top surface of the metal post 120 being too narrow caused by the top opening of the first groove 1201 being too large.

In some embodiments, a difference between a diameter of an inscribed circle of the orthographic projection of the metal post 120 on the metal base 110 and a diameter of an inscribed circle of the orthographic projection of the first groove 1201 on the metal base 110 is greater than or equal to 2 mm, ensuring that the top surface of the metal post 120 has a width greater than or equal to 2 mm, and that the wall thickness of the first groove 1201 of the metal post 120 is large enough to improve the structural strength of the pole post 100.

In some embodiments, a shape of the orthogonal projection of the first groove 1201 on the metal base 110 is circular, triangular, rectangular, or other polygon.

In some embodiments, the diameter of the inscribed circle of the orthographic projection of the first groove 1201 on the metal base 110 is less than or equal to 40 mm. That is, a diameter of an inscribed circle of an opening of the first groove 1201 on the metal base 110 is less than or equal to 40 mm. Within this diameter range, the setting of the first groove 1201 increases the height of the metal post 120 of the pole post 100, and avoids the problem of excessive area occupied by the metal post 120 of the pole post 100 in the radial direction due to the opening of the first groove 1201.

In some embodiments, the joint surface 1001 between the metal post 120 and the metal base 110 located between the second groove 1101 and the first groove 1201 is a flat surface.

As illustrated in FIG. 3, in some embodiments, the metal post 120 is a cylinder, and the outer sidewall 1204 of the metal post 120 is perpendicular to the top surface of the metal post 120, and perpendicular to the plane F where the bottom surface of the metal post 120 between the second groove 1101 and the first groove 1201 is located. The distance $H_0$ between an initial top surface of the metal base 110 and an initial bottom surface of the metal post 120 before the cold heading process, and the distance H between the top surface of the metal base 110 and the plane F where the bottom surface of the metal post 120 between the second groove 1101 and the first groove 1201 is located after the cold heading process satisfy the following Equation 1:

$$H \cdot S + V = H_0 \cdot S_0 \text{ (Equation 1)};$$

in which 3 mm $\leq H_0 \leq$ 10 mm, $S_0$ represents an area of the orthographic projection of the bottom surface of the metal post 120 on the metal base 110 before the cold heading process, S represents an area of the orthographic projection of the bottom surface of the metal post 120 on the metal base 110 after the cold heading process, and V represents a volume of the first groove 1201.

Because the area of the orthogonal projection of the bottom surface of the metal post 120 on the metal base 110 has small changes during the cold heading process, it is considered that $S_0$ is equal to S. Therefore, H, $H_0$, and S satisfy the following equation: $(H-H_0) \cdot S = V$.

Alternatively, the metal post 120 is a platform. An angle between the outer sidewall 1204 of the metal post 120 and the top surface of the metal post 120 is greater than or less than 90°, and an angle between the outer sidewall 1204 of the metal post 120 and the bottom surface of the metal post 120 between the second groove 1101 and the first groove 1201 is greater than or less than 90°. The distance $H_0$ between the initial top surface of the metal post 120 and the initial bottom surface of the metal post 120 before the cold heading process, and the distance H between the top surface of the metal post 120 and the plane F where the bottom surface of the metal post 120 between the first groove 1201 and the second groove 1101 is located after the cold heading process satisfy the following equation:

$$\frac{1}{3} \cdot H \cdot \left( S_{01}{}^2 + S_{02}{}^2 + \sqrt{S_{01}{}^2 \cdot S_{02}{}^2} \right) + V = \frac{1}{3} H_0 \cdot \left( S_{03}{}^2 + S_{04}{}^2 + \sqrt{S_{03}{}^2 \cdot S_{04}{}^2} \right);$$

in which 3 mm$\leq H_0 \leq$10 mm, $S_{01}$ represents an area of the orthographic projection of the bottom surface of the metal post 120 on the metal base 110 after the cold heading process, $S_{02}$ represents an area of the orthographic projection of the top surface of the metal post 120 on the metal base 110 after the cold heading process, $S_{03}$ represents an area of the orthographic projection of the bottom surface of the metal post 120 on the metal base 110 before the cold heading process, $S_{04}$ represents an area of the orthographic projection of the top surface of the metal post 120 on the metal base 110 before the cold heading process, and V represents the volume of the first groove 1201. Because the area of the orthographic projection of the metal post 120 on the metal base 110 has small changes during the cold heading process, and differences between $S_{01}$ and $S_{02}$, and between $S_{03}$ and $S_{04}$ are small, it is considered that $S$, $S_{01}$, $S_{02}$, $S_{03}$, and $S_{04}$ satisfy the following equation:

$$\frac{1}{3\left(S_{01}{}^2+S_{02}{}^2+\sqrt{S_{01}{}^2\cdot S_{02}{}^2}\right)}=\frac{1}{3\left(S_{03}{}^2+S_{04}{}^2+\sqrt{S_{03}{}^2\cdot S_{04}{}^2}\right)}=S;$$

In some embodiments, the first groove 1201 is an inverted circular truncated cone, and the orthogonal projection of the first groove 1201 on the metal base 110 is circular. The volume V of the first groove 1201 satisfies the following Equation 2:

$$V=\frac{1}{3}\,\pi\,L\,[(\frac{A_1}{2})^2+(\frac{A_1}{2}\,\frac{A}{2})+(\frac{A}{2})^2]\;(\text{Equation 2});$$

in which $A_1$ represents a diameter of the bottom surface 1202 of the first groove 1201, A represents a diameter of the top opening of the first groove 1201, and L represents a depth of the first groove 1201.

The metal post 120 is a cylinder, and the orthogonal projection of the metal post 120 on the metal base 110 is circular. The area S of the orthogonal projection of the bottom surface of the metal post 120 on the metal base 110 satisfies the following Equation 3:

$$S=\pi\,(\frac{D}{2})^2\;(\text{Equation 3});$$

in which D represents a diameter of the orthogonal projection of the metal post 120 on the metal base 110.

After substituting the Equation 3 into the Equation 1, the following equation is obtained: $(H-H_0)\,\pi\,(\frac{D}{2})^2=V$.

After substituting the Equation 2 into the equation " $(H-H_0)\,\pi\,(\frac{D}{2})^2=V$ ", the following equation is obtained:

$$(H-H_0)\,\pi\,(\frac{D}{2})^2=\frac{1}{3}\,\pi\,L\,[(\frac{A_1}{2})^2+(\frac{A_1}{2}\,\frac{A}{2})+(\frac{A}{2})^2].$$

In some embodiments, when the distance H between the top surface of the metal post 120 and the plane F where the bottom surface of the metal post 120 between the first groove 1201 and the second groove 1101 is located after the cold heading process satisfies the above equation, the equal volume deformation of the metal post 120 after the cold heading process can be achieved, and the waste of materials during processing can be avoided.

Alternatively, the first groove 1201 is an inverted quadrangular frustum. The volume V of the first groove 1201 satisfies the following equation:

$$V=\frac{1}{3}\cdot L\cdot\left(S_1+S_2+\sqrt{S_1\cdot S_2}\right);$$

in which $S_1$ represents an area of a top surface of the inverted quadrangular frustum, $S_2$ represents an area of a bottom surface of the inverted quadrangular frustum, and L represents a distance between the top surface of the inverted pyramid and the bottom surface of the inverted quadrangular frustum.

In some embodiments, the orthogonal projection of the first groove 1201 on the metal base 110 is in a square shape. The volume V of the first groove 1201 satisfies the following equation:

$$V = \frac{1}{3} \cdot L \cdot \left( A_2{}^2 + A_3{}^2 + \sqrt{A_2{}^2 \cdot A_3{}^2} \right);$$

in which $A_2$ represents a length of a side of the top surface of the inverted quadrangular frustum, $A_3$ represents a length of a side of the bottom surface of the inverted quadrangular frustum, and L represents a distance between the top surface of the inverted pyramid and the bottom surface of the inverted quadrangular frustum.

Alternatively, the first groove 1201 is an inverted triangular frustum. The volume V of the first groove 1201 satisfies the following equation:

$$V = \frac{1}{3} \cdot L \left( S_3 + S_4 + \sqrt{S_3 \cdot S_4} \right);$$

in which $S_3$ represents an area of a top surface of the inverted triangular frustum, $S_4$ represents an area of a bottom surface of the inverted triangular frustum, and L represents a distance between the top surface of the inverted triangular frustum and the bottom surface of the inverted triangular frustum.

In some embodiments, the orthogonal projection of the first groove 1201 on the metal base 110 is in an equilateral triangle shape. The volume V of the first groove 1201 satisfies the following equation:

$$V = \frac{1}{3} \cdot L \cdot \left( \frac{1}{2} \, a_1 \, h_1 + \frac{1}{2} \, a_2 \, h_2 + \sqrt{\frac{1}{2} \, a_1 \, h_1 \cdot \frac{1}{2} \, a_2 \, h_2} \right);$$

in which $a_1$ represents a length of a side of the top surface of the inverted triangular frustum, $h_1$ represents a height of a side of the top surface of the inverted triangular frustum, $a_2$ represents a length of a side of the bottom surface of the inverted triangular frustum, $h_2$ represents a height of a side of the bottom surface of the inverted triangular frustum, and L represents a distance between the top surface of the inverted triangular frustum and the bottom surface of the inverted triangular frustum.

Alternatively, the metal post 120 is a prism, and the orthogonal projection of the metal post 120 on the metal base 110 is in a square shape. The outer sidewall of the metal post 120 is perpendicular to the top surface of the metal post 120, and perpendicular to the plane F where the bottom surface of the metal post 120 between the first groove 1201 and the second groove 1101 is located. The area S of the orthogonal projection of the bottom surface of the metal post 120 on the metal base 110 satisfies the following equation:

$$S = D_1{}^2;$$

in which $D_1$ represents a length of a side of the orthographic projection of the metal post 120 on the metal base 110.

In some embodiments, after substituting the equation "$S = D_1{}^2$" into the equation "$(H-H_0) \, S = V$", the following equation is obtained: $(H-H_0) \, D_1{}^2 = V$.

Alternatively, the metal post 120 is a prism, and the orthogonal projection of the metal post 120 on the metal base 110 is in a rectangle shape. The outer sidewall of the metal post 120 is perpendicular to the top surface of the metal post 120, and perpendicular to the plane F where the bottom surface of the metal post 120 between the first groove 1201 and the second groove 1101 is located. The area S of the orthogonal projection of the bottom surface of the metal post 120 on the metal base 110 satisfies the following equation:

$$S = D_2 \cdot W;$$

in which $D_2$ represents a length of the orthographic projection of the metal post 120 on the metal base 110, and W represents a width of the orthographic projection of the metal post 120 on the metal base 110.

In some embodiments, after substituting the equation "$S=D_2 W$" into the equation "$(H-H_0) S=V$", the following equation is obtained: $(H-H_0) D_2 W=V$.

Alternatively, the metal post 120 is a prism, and the orthogonal projection of the metal post 120 on the metal base 110 is in a triangle shape. The outer sidewall of the metal post 120 is perpendicular to the top surface of the metal post 120, and perpendicular to the plane F where the bottom surface of the metal post 120 between the first groove 1201 and the second groove 1101 is located. The area S of the orthogonal projection of the bottom surface of the metal post 120 on the metal base 110 satisfies the following equation:

$$S=\sqrt{3} \cdot D_3 h_3;$$

in which $D_3$ represents a length of a side of the orthographic projection of the metal post 120 on the metal base 110, and $h_3$ represents a height of a side of the orthographic projection of the metal post 120 on the metal base 110.

In some embodiments, after substituting the equation "$S=\sqrt{3} \cdot D_3 h_3$" into the equation "$(H-H_0) S=V$", the following equation is obtained: $(H-H_0) \sqrt{3} D_3 h_3=V$.

In some embodiments, when the metal base 110 is extruded upwards to form the first groove 1201, an upward protrusion portion formed by the metal base 110 at the position corresponding to the first groove 1201 and a downward protrusion portion formed by the metal post 120 in a stretch deformation area cancel out. Therefore, the area S of the orthogonal projection of the metal post 120 on the metal base 110 is considered to be equal to the area of the bottom surface of the metal post 120.

In some embodiments, before the cold heading process, the distance $H_0$ between the initial top surface of the metal post 120 and the initial bottom surface of the metal post 120 ranges from 3 mm to 5 mm; and after the cold heading process, the distance H between the top surface of the metal post 120 and the plane F where the bottom surface of the metal post 120 between the second groove 1101 and the first groove 1201 is located ranges from 4.7 mm to 5.2 mm.

In some embodiments, the outer sidewall 1204 of the metal post 120 is parallel to the axis of the pole post 100.

In some embodiments, the outer sidewall 1204 of the metal post 120 is a first fixed surface of the pole post 100. During the cold heading process, the first fixed surface is fixed on the cold heading equipment, so that the area of the orthographic projection of the metal base 110 on the metal post 120 remains unchanged. During the process of forming the first groove 1201, the metal post 120 undergoes an external force and extends to the metal base 110, thereby achieving the increasing of the height of the metal base 110. By selecting the depth and/or the diameter of the first groove 1201, the volume of the first groove 1201 is controlled, so as to adjust the height of the metal post 120 without additional raw materials.

In some embodiments, the orthographic projection of the metal post 120 on the metal base 110 is in a circular shape. The sidewall of the metal post 120 is perpendicular to the plane where the metal base 110 is located. The first groove 1201 is in an inverted circular truncated cone shape. The angle $\alpha$ between the bottom surface 1202 of the first groove 1201 and the sidewall 1203 of the first groove 1201 is, for example, 135°. The diameter A of the top opening of the first groove 1201 is, for example, 14 mm. The diameter A1 of the bottom surface 1202 of the first groove 1201 is, for example, 10 mm. The depth L of the first groove 1201 is, for example, 2 mm. The diameter D of the orthogonal projection of the metal post 120 on the metal base 110 is, for example, 30 mm. Before the cold heading process, the distance $H_0$ between the initial top surface of the metal post 120 and the initial bottom surface of the metal post 120 is, for example, 4 mm. After the cold heading process, the distance H between the top surface of the metal post 120 and the plane F where the bottom surface of the metal post 120 between the second groove 1101 and the first groove 1201 is located is, for example, 4.32 mm.

Alternatively, the orthogonal projection of the metal post 120 on the metal base 110 is in a circular shape. The sidewall of the metal post 120 is perpendicular to the plane where the metal base 110 is located. The first groove 1201 is in an inverted circular truncated cone shape. The angle $\alpha$ between the bottom surface 1202 of the first groove 1201 and the sidewall 1203 of the first groove 1201 is, for example, 120°. The diameter A of the top opening of the first groove 1201 is, for example, 9.1147 mm. The diameter A1 of the bottom surface 1202 of the first groove 1201 is, for example, 8 mm. The depth L of the first groove 1201 is, for example, 1 mm. The diameter D of the orthogonal projection of the metal post 120 on the metal base 110 is, for example, 12 mm. Before the cold heading process, the distance $H_0$ between the initial top surface of the metal post 120 and the initial bottom surface of the metal post 120 is, for example, 4 mm.

After the cold heading process, the distance H between the top surface of the metal post 120 and the plane F where the bottom surface of the metal post 120 between the second groove 1101 and the first groove 1201 is located is, for example, 4.51 mm.

In some embodiments, the diameter d of the inscribed circle of the orthogonal projection of the metal base 110 on the plane where the metal base 110 is located and the diameter D of the inscribed circle of the orthogonal projection of the metal post 120 on the plane where the metal base 110 is located satisfy the following relationship: $0.5 \leq D/d < 1$. Under the condition of satisfying the above relationship, the flange 111 has a longer extension length, which improves the stability of the connection between the pole post 100 and the cap plate 200.

In some embodiments, the diameter d of the inscribed circle of the orthogonal projection of the metal base 110 on the plane where the metal base 110 is located and the diameter D of the inscribed circle of the orthogonal projection of the metal post 120 on the plane where the metal base 110 is located satisfy the following relationship: $0.5 \leq D/d < 1$. That is, the ratio D/d of the minimum diameter D of the metal post 120 to the maximum diameter d of the metal base 110 is greater than or equal to 0.5 and less than 1. In some embodiments, when the outer sidewall 1204 of the metal post 120 is a vertical plane, the diameter of the metal post 120 in the axial direction remains unchanged and is the minimum diameter D of the metal post 120. When the outer sidewall 1204 of the metal post 120 is the inclined surface mentioned above, diameters of the metal post 120 at different points in the axis direction are different, the diameter of the metal post 120 at the thinnest position is the minimum diameter D of the metal post 120. As illustrated in FIG. 3, the metal base 110 includes the first step 112, so the maximum diameter d of the metal base 110 is the diameter of the largest part of the metal base 110. For example, the ratio D/d can be 0.5, 0.6, 0.7, 0.8, or 0.9. By setting the ratio D/d in the above range, the disclosure improves the structural strength of the pole post 100, ensures that the outer diameter of the metal base 110 is greater than the outer diameter of the metal post 120, and allows the metal base 110 to abut against the lower surface of the top cap assembly to achieve a limiting effect after the metal post 120 passes through the top cap assembly.

In some embodiments, because the outer diameter of the metal base 110 is greater than the outer diameter of the metal post 120, a part of the metal base 110 protrudes from the outer sidewall 1204 of the metal post 120 in a radial direction to form a protruding portion. In some embodiments, a thickness of the protruding portion decreases gradually in a radial direction away from the metal post 120, which saves copper materials and reduces the cost of the production. Moreover, it can reduce the weight of the pole post 100 and save space occupied by the raw materials due to the reduction of the copper materials.

In some embodiments, when the orthographic projection of the metal base 110 on the plane where the metal base 110 is located is in a circular shape, the diameter d of the inscribed circle of the orthographic projection of the metal base 110 on the plane where the metal base 110 is located is equal to the diameter of the orthographic projection of the metal base 110 on the plane where the metal base 110 is located.

When the orthographic projection of the metal base 110 on the plane where the metal base 110 is located is in a circular shape, the diameter D of the inscribed circle of the orthographic projection of the metal post 120 on the plane where the metal base 110 is located is equal to the diameter of the orthographic projection of the metal post 120 on the plane where the metal base 110 is located.

In some embodiments, the ratio D/d of the outer diameter d of the metal base 110 to the outer diameter D of the metal post 120 can be 0.5, 0.6, 0.7, 0.8, or 0.9.

As illustrated in FIG. 3, in some embodiments, a surface of the metal base 110 close to the metal post 120 is provided with a third protrusion portion 1143. The third protrusion portion 1143 surrounds the outer periphery of a second protrusion portion of the metal post 120. A distance between a top surface of the third protrusion portion 1143 and a top surface of the flange 111 is greater than 0.3 mm and less than 1.2 mm.

In some embodiments, the distance between the bottom surface 1202 of the first groove 1201 and the joint surface 1001 between the metal base 110 and the metal post 120 is greater than or equal to 0.5 mm, so that the bottom surface 1202 of the first groove 1201 is higher than the joint surface 1001 between the metal base 110 and the metal post 120, avoiding the first groove 1201 exposing the metal base 110 caused by the first groove 1201 passing through the metal post 120.

In some embodiments, a cross-sectional surface of the second groove 1101 is in a trapezoid shape.

In some embodiments, a rounded corner is formed between a sidewall of the second groove 1101 and a bottom surface of the second groove 1101, and a rounded corner is formed between the sidewall 1203 of the first groove 1201 and a top surface of the first groove 1201.

By setting the connecting portions between the sidewall of the second groove 1101 and the bottom surface of the second groove 1101, and between the sidewall 1203 of the first groove 1201 and the top surface of the first groove 1201 to be round, respectively, it is conducive to the flow deformation of the metal base 110 and the metal post 120. Moreover, it makes the pole post 100 undergo uniform force during the cold heading process, avoiding the fracture risk of the metal base 110 and/or the metal post 120 during the extrusion process.

Embodiment 3

As illustrated in FIG. 4, in this embodiment, the pole post 100 includes the metal base 110 and the metal post 120 connected to the metal base 110. A surface of the metal base 110 close to the metal post 120 is provided with the first concave portion 1141 matched with the first protrusion portion 1211. A second protrusion portion 1142 is provided at the center of the metal base 110. A second concave portion 1212 is provided at the center of the metal post 120. The second protrusion portion 1142 is embedded into and connected to the second concave portion 1212.

The metal base 110 is further provided with a third protrusion portion 1143 disposed surrounding the second protrusion portion 1142. The first concave portion 1141 is formed between the third protrusion portion 1143 and the second protrusion portion 1142. The metal post 120 is further provided with a third concave portion 1213 disposed surrounding the second concave portion 1212. The first protrusion portion 1211 is formed between the third concave portion 1213 and the second concave portion 1212. The third protrusion portion 1143 is embedded into the third concave portion 1213. The first protrusion portion 1211 is embedded into the first concave portion 1141.

The pole post 100 is prepared by a composite plate by the cold heading process, or, prepared by the cold heading of the metal base 110 and the metal post 120 disposed detachably. The pole post 100 is a negative pole post. Alternatively, one of the metal base 110 and the metal post 120 is a copper plate, and another of the metal base 110 and the metal post 120 is an aluminum plate. In some embodiments, the metal base 110 is a copper plate, and the metal post 120 is an aluminum plate.

The pole post 100 provided in some embodiments is prepared by a copper-aluminum composite plate by the cold heading process. Compared to the traditional pole posts formed by friction welding, the cold heading process improves the efficiency of producing the pole posts, effectively reduces the waste of materials for producing the pole posts, and better controls the production cost of the pole post. By setting the second protrusion portion 1142 being embedded into the second concave portion 1212, the third protrusion portion 1143 being embedded into the third concave portion 1213, and the first protrusion portion 1211 being embedded into the first concave portion 1141, the metal base 110 can be connected to the metal post 120 to form the uneven joint surface 1001, and the three sets of combinations of protrusion portions and concave portions increase the area of the joint surface 1001, strengthen the bonding strength between the metal base 110 and the metal post 120, reduce the fracture risk of the pole post 100, and improve the reliability of the pole post 100.

In some embodiments, as illustrated in FIG. 1 and FIG. 4, both of the metal base 110 and the metal post 120 are cylindrical structures, and the outer diameter of the metal base 110 is greater than the outer diameter of the metal post 120, so that the metal base 110 abuts against the lower surface of the top cap assembly to achieve a limiting effect after the metal post 120 passes through the top cap assembly. The second protrusion portion 1142, the third protrusion portion 1143, and the first concave portion 1141 are all disposed surrounding the metal base 110 in a circumferential direction of the metal base 110. The second protrusion portion 1142 and the third protrusion portion 1143 are formed by the flow of the material for the metal base 110 during the cold heading process. The second concave portion 1212, the third concave portion 1213, and the first protrusion portion 1211 are disposed surrounding the metal post 120 in a circumferential direction of the metal post 120. The first protrusion portion 1211 is formed by the flow of the material for the metal post 120 during the cold heading process.

In some embodiments, during the cold heading process, a surface of the metal base 110 away from the metal post 120 is provided with corrugated patterns in a radial direction. The corrugated patterns are naturally formed during the cold heading process, which increases the structural strength of the metal base 110.

As illustrated in FIG. 4, in some embodiments, the first protrusion portion 1211 includes a first socket section 12111 and a first buckle section 12112. An end of the first socket section 12111 is connected to the metal post 120, and another end of the first socket section 12111 is connected to the first buckle section 12112. An angle is formed between the first buckle section 12112 and the first socket section 12111. The first concave portion 1141 is matched with the first protrusion portion 1211. The third protrusion portion 1143 includes a second socket section 11431 and a second buckle section 11432. An end of the second socket section 11431 is connected to the metal base 110, and another end of the second socket section 11431 is connected to the second buckle section 11432. An angle is formed between the second buckle section 11432 and the second socket section 11431. The third concave portion 1213 is matched with the third protrusion portion 1143.

The first buckle section 12112 is embedded into a notch formed by the second buckle section 11432 and the second socket section 11431. The second buckle section 11432 is embedded into a notch formed by the first buckle section 12112 and the socket section 12111. While increasing the area of the joint surface 1001, the third protrusion portion 1143 can be interlocked with the first protrusion portion 1211, strengthening the bonding strength between the metal base 110 and the metal post 120, reducing the fracture risk of the pole post 100, and improving the reliability of the pole post 100.

In some embodiments, the first socket section 12111 and the first buckle section 12112 are connected to form a L-shaped structure, the second socket section 11431 and the second buckle section 11432 are connected to form a L-shaped structure, and the third protrusion portion 1143 can be completely meshed and interlocked with the first protrusion portion 1211. The settings improve the interlocking effect between the third protrusion portion 1143 and the first protrusion portion 1211.

In some embodiments, as illustrated in FIG. 4, a surface at the junction of the second protrusion portion 1142 and the second concave portion 1212 is a copper-aluminum joint surface, which is the original joint surface 1001 of the copper-aluminum composite plate. A part of the joint surface 1001 at other positions is formed during the cold heading process. The second protrusion portion 1142 is in complete contact with the second concave portion 1212 through the copper-aluminum joint surface to ensure the stability of the connection between the metal base 110 and the metal post 120. A gap is formed between a top of the third protrusion portion 1143 and the metal post 120, enabling the third protrusion portion 1143 and the first protrusion portion 1211 to meet the dimension requirement for interlocking, ensuring a better interlocking effect between the third protrusion portion 1143 and the first protrusion portion 1211, further strengthening the bonding strength between the metal base 110 and the metal post 120, and reducing the fracture risk of the pole post 100.

In some embodiments, as illustrated in FIG. 4, the second groove 1101 is formed in the metal base 110 away from the metal post 120. In some embodiments, when using a cold heading mold to form the metal base 110 by the cold heading process, the second groove 1101 is formed by the cold heading process. At the same time, the second protrusion portion 1142 is formed at another side of the metal base 110 by the cold heading process, and the second concave portion 1212 matched with the second protrusion portion 1142 is formed at a side of the metal post 120 by the cold heading process. In addition, when forming the second groove 1101 at the bottom of the metal base 110 by the cold heading process, part of material of the metal base 110 extends radically outwards. Because the volume is not changed after the metal base 110 deforms during the cold heading process, the diameter of the metal base 110 can be enlarged, and the dimensions around the second groove 1101 can be enlarged accordingly to meet the requirement for the dimension.

In some embodiments, as illustrated in FIG. 4, an annular groove 115 is formed in the metal base 110 facing the metal post 120, and the annular groove 115 is disposed surrounding the third protrusion portion 1143. By forming the annular groove 115 in the metal base 110 by the cold heading process, the material originally located at the annular groove 115 of the metal base 110 extends radically outwards during the cold heading process. Because the volume is not changed after the metal base 110 deforms during the cold heading process, the dimension of the metal base 110 and the third protrusion portion 1143 can be enlarged, thereby improving the structural strength of the metal base 110 and saving material for producing the metal base 110.

As illustrated in FIG. 4, a peripheral dimension of the third protrusion portion 1143 is greater than the peripheral dimension of the metal post 120, so as to form a second step 116 between the third protrusion portion 1143 and the metal post 120. Because aluminum has better fluidity than copper, the diameter of the metal post 120 is less than the diameter of the third protrusion portion 1143 during the cold heading process to form the second step 116, which enhances the structural strength of the pole post 100.

In some embodiments, as illustrated in FIG. 4, the first groove 1201 is formed in the metal base 110 away from the metal post 120. By forming the first groove 1201 on the top of the metal post 120 by the cold heading process, the material originally located at the first groove 1201 can move to other positions of the metal post 120. While meeting the requirement for the dimension, because the diameter of the metal post 120 remains unchanged during the cold heading process, the height of the metal post 120 is increased, saving material for producing the metal post 120, and reducing the cost of producing the metal post 120.


Embodiment 4

The structure of the pole post 100 provided in the embodiment 4 is similar to that of the pole post 100 provided in the embodiment 3. The same features will not be repeated here. The difference is in that the third protrusion portion 1143 is not interlocked with the first protrusion portion 1211.

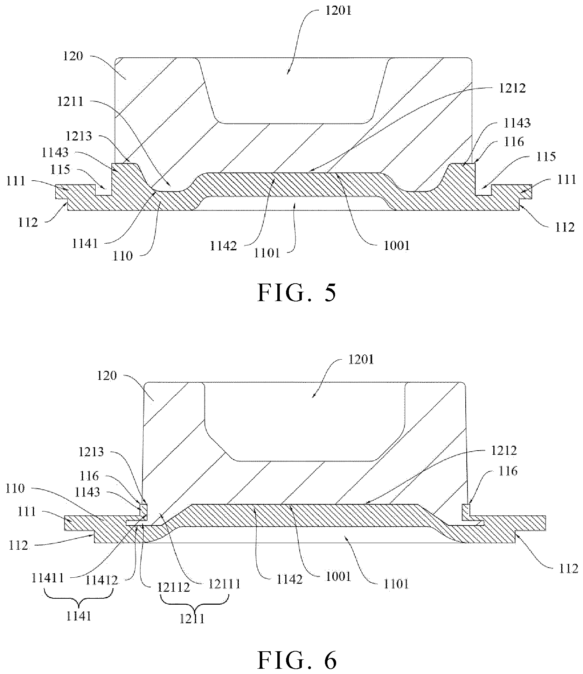

As illustrated in FIG. 5, in some embodiments, a surface of the first protrusion portion 1211 is an arc-shaped surface. The transition between the second concave portion 1212 and the first protrusion portion 1211 is smooth through the connecting of the arc-shaped surface. That is, a connecting surface between the second concave portion 1212 and the first protrusion portion 1211 is the arc-shaped surface. The transition between the third concave portion 1213 and the first protrusion portion 1211 is also smooth, and a connecting surface between the third concave portion 1213 and the first protrusion portion 1211 is an arc-shaped surface as well, so that the joint surface 1001 between the metal base 110 and the metal post 120 is constructed in a wavy shape, thereby strengthening the bonding strength between the metal base 110 and the metal post 120 by increasing the area of the joint surface 1001, reducing the fracture risk of the pole post 100, and improving the reliability of the pole post 100.

Embodiment 5

The structure of the pole post 100 provided in the embodiment 5 is similar to that of the pole post 100 provided in the embodiment 3. The same features will not be repeated here. The difference is in the structures of the third protrusion portion 1143 and the first protrusion portion 1211.

As illustrated in FIG. 6, in some embodiments, a shape of a longitudinal sectional surface of the third protrusion portion 1143 is linear, and the longitudinal sectional surface of the third protrusion portion 1143 is vertically connected to the upper surface of the metal base 110. The first concave portion 1141 includes a socket slot 11411 and a buckle slot 11412. An end of the socket slot 11411 is provided with an opening for inserting the first protrusion portion 1211, which is in an open shape, and another end of the socket slot 11411 is connected to the buckle slot 11412. The socket slot 11411 is formed between the second protrusion portion 1142 and the third protrusion portion 1143. An angle is formed between the buckle slot 11412 and the socket slot 11411. The buckle slot 11412 extends outward and into the metal post 120. The socket section 12111 is embedded into the socket slot 11411, and the first socket section 12112 is embedded into the buckle slot 11412, so that the metal base 110 and the first socket section 12112 can form an interlocking mechanism, strengthening the bonding strength between the metal base 110 and the metal post 120, reducing the fracture risk of the pole post 100, and improving the reliability of the pole post 100.

In some embodiments, the socket section 12111 and the first buckle section 12112 are connected to form a L-shaped structure, and the socket slot 11411 and the buckle slot 11412 are connected to form a L-shaped slot, thereby improving the interlocking effect of the metal base 110 and the first buckle section 12112, further strengthening the bonding strength between the metal base 110 and the metal post 120, reducing the fracture risk of the pole post 100, and improving the reliability of the pole post 100.

As illustrated in FIGs. 7 to 10, embodiments of the disclosure further provide a top cap assembly, which includes the cap plate 200 and the pole post 100 as discussed above. The pole post 100 is disposed on the cap plate 200.

In some embodiments, the top cap assembly further includes the briquetting 300, the connecting sheet 400, and the pole post 100. The mounting hole 310 is provided in the briquetting 300. The pole post 100 passes through the cap plate 200 and is matched with the mounting hole 310. The pole post 100 and the briquetting 300 are fixed by laser welding. The briquetting 300 and the pole post 100 abut against two sides of the cap plate 200, respectively.

Embodiments of the disclosure further provide a cell, which includes a housing, an electrode assembly, and a top cap assembly. The top cap assembly includes the pole post 100 as discussed above. The electrode assembly is disposed in an internal cavity of the housing. The cap plate 200 of the top cap assembly is connected to the housing. The electrode assembly is electrically connected to the pole post 100 of the top cap assembly. By using the pole post 100, the cost of the cell can be reduced and the safety of the cell can be improved.

Embodiments of the disclosure further provide a battery module, which includes the cell as discussed above. By using the cell, the cost of the battery module can be reduced and the safety of the battery module can be improved.

Embodiments of the disclosure further provide a battery pack, which includes the battery module as discussed above. By using the battery module, the cost of the battery pack can be reduced and the safety of the battery pack can be improved.

**Claims**

1. A pole post (100), **characterized in that** the pole post (100) comprises:

    a metal base (110);
    a metal post (120) disposed on a top of the metal base (110), wherein a material of the metal post (120) is different from a material of the metal base (110), a bottom of the metal post (120) is connected to a top of the metal base (110), and a surface of the metal post (120) away from the metal base (110) is provided with a first groove (1201).

2. The pole post (100) of claim 1, **characterized in that** a distance **H** between a top surface of the metal post (120) and a plane where the bottom surface of the metal post (120) below the bottom surface (1202) of the first groove (1201) is located, a volume **V** of the first groove (1201), and an area **S** of an orthogonal projection of the metal post (120) on the metal base (110) satisfy the following relationship: 3 mm $\leq$ H-V/S $\leq$10 mm; or
    a surface of the metal base (110) away from the metal post (120) is provided with a second groove (1101), a part of the bottom surface of the metal post (120) is located between the first groove (1201) and the second groove (1101), and a part of the metal base (110) protrudes from a peripheral surface of the metal post (120) in a radial direction; and a longitudinal sectional surface of the second groove (1101) is in an arc shape, and an angle $\beta$ between a circumferential sidewall of the second groove (1101) and a horizontal plane is greater than or equal to 15° and less than or equal to 60°.

3. The pole post (100) of claim 1, **characterized in that** a peripheral surface of the metal base (110) is provided with a flange (111), and the flange (111) protrudes from an edge of the metal post (120) in a direction away from an axis of the metal base (110).

4. The pole post (100) of claim 3, **characterized in that** a surface of the flange (111) away from the metal post (120) is provided with a first step (112); and the first step (112) is disposed surrounding an outer edge of the metal base (110) and configured to be matched with a stepped hole (410) of a connecting sheet (400) of a top cap assembly.

5. The pole post (100) of claim 1, **characterized in that** a joint surface (1001) between the metal post (120) and the metal base (110) is recessed towards the metal base (110), or a joint surface (1001) between the metal post (120) and the metal base (110) is uneven.

6. The pole post (100) of claim 5, **characterized in that** a surface of the metal base (110) away from the metal post (120) is provided with a second groove (1101), and a part of the bottom surface of the metal post (120) is located between the first groove (1201) and the second groove (1101); and a surface of the metal post (120) close to the metal base (110) is provided with a first protrusion portion (1211) protruding towards the metal base (110), and an orthographic projection of the first protrusion portion (1211) on a plane where the metal base (110) is located surrounds outside an orthographic projection of a bottom surface (1202) of the first groove (1201) on the plane where the metal base (110) is located.

7. The pole post (100) of claim 6, **characterized in that** a surface of the metal base (110) close to the metal post (120) is provided with a first concave portion (1141) matched with the first protrusion portion (1211), a top surface of the first concave portion (1141) is in contact with a bottom surface of the first protrusion portion (1211), and a joint surface (1001) between the first concave portion (1141) and the first protrusion portion (1211) is a curved surface.

8. The pole post (100) of claim 7, **characterized in that** a longitudinal sectional surface of a part of the metal post (120) overlapping with the curved surface comprises a stretch line (122), which is a curve; and a protruding direction of the stretch line (122) and a protruding direction of the first protrusion portion (1211) are same.

9. The pole post (100) of claim 6, **characterized in that** a surface of the metal base (110) close to the metal post (120) is provided with a first concave portion (1141) matched with the first protrusion portion (1211); and the metal base (110) is provided with a second protrusion portion (1142), the metal post (120) is provided with a second concave portion (1212), and the second protrusion portion (1142) is embedded into and connected to the second concave portion (1212); and
wherein the metal base (110) is further provided with a third protrusion portion (1143) disposed surrounding the second protrusion portion (1142), and the first concave portion (1141) is formed between the third protrusion portion (1143) and the second protrusion portion (1142); the metal post (120) is further provided with a third concave portion (1213) disposed surrounding the second concave portion (1212), and the first protrusion portion (1211) is formed between the third concave portion (1213) and the second concave portion (1212); and the third protrusion portion (1143) is embedded into the third concave portion (1213), and the first protrusion portion (1211) is embedded into the first concave portion (1141).

10. The pole post (100) of claim 9, **characterized in that** the first protrusion portion (1211) comprises a first socket section (12111) and a first buckle section (12112), an end of the first socket section (12111) is connected to the metal post (120), and another end of the first socket section (12111) is connected to the first buckle section (12112); an angle is formed between the first buckle section (12112) and the first socket section (12111); and the first concave portion (1141) is matched with the first protrusion portion (1211).

11. The pole post (100) of claim 10, **characterized in that** the third protrusion portion (1143) comprises a second socket section (11431) and a second buckle section (11432), an end of the second socket section (11431) is connected to the metal base (110), and another end of the second socket section (11431) is connected to the second buckle section (11432); an angle is formed between the second buckle section (11432) and the second socket section (11431); and the third concave portion (1213) is matched with the third protrusion portion (1143); or
the first concave portion (1141) comprises a socket slot (11411) and a buckle slot (11412), an end of the socket slot (11411) is provided with an opening for inserting the first protrusion portion (1211), and another end of the socket slot (11411) is connected to the buckle slot (11412); an angle is formed between the buckle slot (11412) and the socket slot (11411), and the buckle slot (11412) extends into the metal post (120); and the first socket section (12111) is embedded into the socket slot (11411), the first buckle section (12112) is embedded into the buckle slot (11412), and the metal base (110) and the first buckle section (12112) form an interlocking mechanism.

12. The pole post (100) of claim 11, **characterized in that** the first buckle section (12112) is embedded into a notch formed by the second buckle section (11432) and the second socket section (11431), and the second buckle section (11432) is embedded into a notch formed by the first buckle section (12112) and the first socket section (12111), enabling the third protrusion portion (1143) to be interlocked with the first protrusion portion (1211); and
the first socket section (12111) and the first buckle section (12112) are connected to form a L-shaped structure, the second socket section (11431) and the second buckle section (11432) are connected to form a L-shaped structure, and the third protrusion portion (1143) is engaged and interlocked with the first protrusion portion (1211).

13. The pole post (100) of any one of claims 9 to 12, **characterized in that** a surface at junction of the second protrusion portion (1142) and the second concave portion (1212) is a joint surface (1001), and a gap is formed between a top of the third protrusion portion (1143) and the metal post (120); or

a peripheral dimension of the third protrusion portion (1143) is greater than a peripheral dimension of the metal post (120), and a second step is formed between the third protrusion portion (1143) and the metal post (120); or
an annular groove (115) is formed in the metal base (110) facing the metal post (120), and the annular groove (115) is disposed surrounding the third protrusion portion (1143).

14. The pole post (100) of any one of claims 5 to 12, **characterized in that** a peripheral dimension of the metal base (110) is greater than a peripheral dimension of the metal post (120); and a side of the metal base (110) close to the metal post (120) is provided with a boss (113) connected to the metal post (120), and a peripheral dimension of the boss (113) is less than a peripheral dimension of the metal base (110).

15. The pole post (100) of any one of claims 1 to 12, **characterized in that** the pole post (120) is a copper-aluminum composite member, the metal base (110) is a copper layer of the copper-aluminum composite member, and the metal post (120) is an aluminum layer of the copper-aluminum composite member; or
the pole post (120) is a copper-aluminum embedding member, the metal base (110) is a copper layer of the copper-aluminum embedding member, and the metal post (120) is an aluminum layer of the copper-aluminum embedding member.

16. The pole post (100) of any one of claims 1 to 12, **characterized in that** a peripheral dimension of the metal base (110) is greater than a peripheral dimension of the metal post (120), and a thickness of a part of the metal base (110) protruding from the metal post (120) in a radial direction decreases gradually in a radial direction away from the metal post (120); or

the pole post (100) is formed by a cold heading process; or
the pole post (100) is a negative pole post; or
an angle between a bottom surface (1202) of the first groove (1201) and a sidewall (1203) of the first groove (1201) is greater than 90° and less than 180°; or
an outer sidewall (1204) of the metal post (120) is inclined relative to an axis of the metal post (120), and an angle between the outer sidewall (1204) of the metal post (120) and the axis of the metal post (120) is greater than 0° and less than or equal to 3°; or
a difference between a diameter of an inscribed circle of an orthographic projection of the metal post (120) on the metal base (110) and a diameter of an inscribed circle of an orthographic projection of the first groove (1201) on the metal base (110) is greater than or equal to 2 mm; or
a minimum distance **W** between a sidewall (1203) of the first groove (1201) and an outer sidewall (1204) of the metal post (120) is greater than or equal to 1 mm; or
a diameter of an inscribed circle of an orthographic projection of the first groove (1201) on the metal base (110) is less than or equal to 40 mm; or
a diameter **d** of an inscribed circle of an orthogonal projection of the metal base (110) on a plane where the metal base (110) is located and a diameter **D** of an inscribed circle of an orthogonal projection of the metal post (120) on the plane where the metal base (110) is located satisfy the following relationship: $0.5 \leq D/d < 1$.

17. A top cap assembly, **characterized in that** the top cap assembly comprises:

a cap plate (200); and

the pole post (100) as claimed in any one of claims 1 to 16, wherein the pole post (100) is disposed on the cap plate (200).

18. A cell, **characterized in that** the cell comprises a housing, an electrode assembly, and a top cap assembly; wherein the top cap assembly comprises a cap plate (200) and the pole post (100) as claimed in any one of claims 1 to 16, and the pole post (100) is disposed on the cap plate (200); and the electrode assembly is disposed in an internal cavity of the housing, the cap plate (200) is connected to the housing, and the electrode assembly is electrically connected to the pole post (100).

EP 4 478 496 A1

100

FIG. 1

FIG. 2

20

FIG. 3

FIG. 4

FIG. 5

FIG. 6

FIG. 7

FIG. 8

EP 4 478 496 A1

FIG. 9

FIG. 10

24

Europäisches
Patentamt

European
Patent Office

Office européen
des brevets

# EUROPEAN SEARCH REPORT

**Application Number**

EP 24 18 1147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2024/055666 A1 (EVE POWER CO LTD [CN]) 21 March 2024 (2024-03-21) * figures 4, 7 * * paragraphs [0002], [0052] * ----- | 1,3-8, 14-17 | INV. H01M50/15 H01M50/553 H01M50/552 H01M50/562 H01M50/564 |
| X | WO 2023/036291 A1 (JIANGSU ZENERGY BATTERY TECH CO LTD [CN]) 16 March 2023 (2023-03-16) * figure 2 * * paragraphs [0001], [0047], [0049], [0050] * ----- | 1-3,5, 15-18 | |
| X | JP 2017 103127 A (FUKUI BYORA CO LTD) 8 June 2017 (2017-06-08) | 1,3,5-7, 9,13,15, 16 | |
| Y | * figures 2, 7 * * paragraphs [0030], [0053] * ----- | 10-12 | |
| Y | CN 211 428 205 U (WUHAN FUHANG PREC INDUSTRY CO LTD) 4 September 2020 (2020-09-04) * figure 15 * ----- | 10-12 | |

**TECHNICAL FIELDS
SEARCHED    (IPC)**

H01M

The present search report has been drawn up for all claims

| Place of search | Date of completion of the search | Examiner |
|---|---|---|
| The Hague | 24 October 2024 | Gasner, Benoit |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 18 1147

This annex lists the patent family members relating to the patent documents cited in  the above-mentioned European search report.
The members are as contained in the European Patent Office EDP file on
The European Patent Office is in no way liable for these particulars which are merely given for the purpose of information.

24-10-2024

| Patent document cited in search report | Publication date | Patent family member(s) | Publication date |
|---|---|---|---|
| WO 2024055666 A1 | 21-03-2024 | CN 220291026 U<br>WO 2024055666 A1 | 02-01-2024<br>21-03-2024 |
| WO 2023036291 A1 | 16-03-2023 | CN 113629329 A<br>DE 112022003560 T5<br>WO 2023036291 A1 | 09-11-2021<br>23-05-2024<br>16-03-2023 |
| JP 2017103127 A | 08-06-2017 | NONE | |
| CN 211428205 U | 04-09-2020 | NONE | |

EPO FORM P0459

For more details about this annex : see Official Journal of the European Patent Office, No. 12/82